# EUROPEAN PATENT SPECIFICATION

(11) **EP 1 570 599 B1**
(45) Date of publication and mention of the grant of the patent: **03.11.2010**
(21) Application number: 03790151.9
(22) Date of filing: 26.11.2003
(51) Int. Cl.: H04L 7/00, G06F 11/16

(54) **SYSTEM AND METHOD OF DIGITAL SYSTEM PERFORMANCE ENHANCEMENT**
SYSTEM UND VERFAHREN ZUR LEISTUNGSVERBESSERUNG DIGITALER SYSTEME
SYSTEME ET PROCEDE D'AMELIORATION DES PERFORMANCES D'UN SYSTEME NUMERIQUE

(30) Priority: 27.11.2002 US 429736 P
(43) Date of publication of application: 07.09.2005
(73) Proprietor: The Board of Governors for Higher Education State of Rhode Island and Providence Plantations, Providence, RI 02881 (US)
(72) Inventor: UHT, Augustus, K., Cumberland, RI 02864-1220 (US)
(74) Representative: Kazi, Ilya
(86) International application number: PCT/US2003/038010
(87) International publication number: WO 2004/051907

(56) References cited:
- EP-A- 0 980 040
- EP-A- 1 061 651
- US-A1- 2002 038 418
- US-B1- 6 526 106

## Description

### BACKGROUND OF THE INVENTION

The invention relates to the field of digital electronic systems, and in particular to synchronous digital electronic systems.

Computers, including their central processing units (e.g., Intel Pentium), cell phones, microwave ovens and practically every electronic device manufactured today uses digital hardware to operate. Digital circuits that compute a result based solely on the state of the circuits' current inputs are said to be constructed of combinational logic. Combinational systems can be used in many applications, but for any interesting digital system to be realized the system must base its output on both current inputs and the system's prior outputs or state.

There are two types of digital systems with "state" to be held in some in a memory device; hence these systems are often referred to as systems with memory. The first type, asynchronous digital systems, change state as soon as an input changes its value. Modeling, designing and verifying asynchronous systems has in practice been found to be extremely difficult, even with modem asynchronous techniques. An advantage of digital systems is that they operate as fast as the logic delays allow.

A second digital system type is a synchronous system, in which the state only changes at times determined by a global system clock (i.e., in synchronism with the clock). For example, consider a Intel Pentium III processor with a basic on-chip (CPU) clock that oscillates 500 million times a second (i.e., 500 MHz); the processor only changes its state at the start of one or more of those oscillations. The synchronous approach facilitates the design, construction and use of digital systems.

However, an inherent difficulty and performance penalty with synchronous systems is that the duration/period of the clock must be large enough to handle worst-case operating conditions and manufacturing tolerances. This period is typically at least two times the length nominally required by the typical (common) operating and manufacturing tolerances. Therefore, the performance of such a digital systems is often half or less than what it would be but for the worst-case.

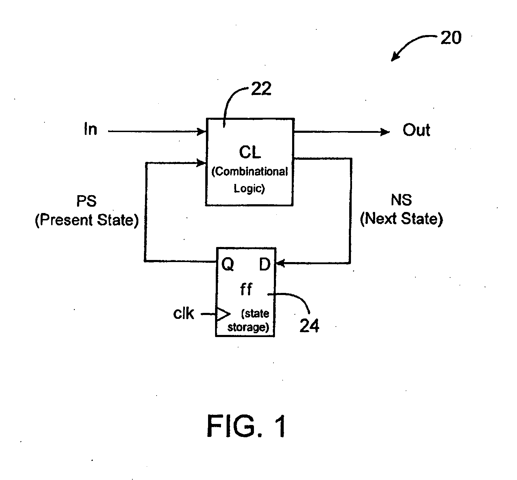

A digital synchronous system 20 can be represented by a block diagram model illustrated in FIG. 1. The components of the system include combinational logic 22 (CL) and flip-flops or latches (FF) 24. The latches 24 hold the current/present state of the system. Each latch typically stores one bit of information. As known, a flip-flop only changes its contents or state when a clock signal makes a transition. The same clock goes to all the latches. The combinational logic 22 has no clock input or feedback loops: a change in one of its inputs propagates to one or more outputs with a delay due only to electrical circuit and speed-of-light constraints. A latch 24 also has a propagation delay, but from the clock transition to a change in its output.

The system 20 operates by using the combinational logic 22 to compute the Next State (NS) of the system from its present state and the current values of the inputs to the system. The next state is then stored in the latches 24 when the clock transitions, and the process repeats. In order for the system to function properly, the computation must propagate through the combinational logic and appear at the inputs to the latches before the relevant transition of the clock occurs at the latches.

If the exact delays through the logic and latches were known, the clock frequency would be set to the inverse of the sum of the delays, and the system would operate at peak performance (as measured by computations per second). However, the delays are not constant, but vary with differences in the manufacturing process, variations in the power supply voltage, variations in the operating temperature and humidity, as well as other factors. As a result of these variations, and the necessity to guarantee the operation of the digital system in the worst-case situation (e. g., temperature extremes), the clock speed is set to a lower, more conservative value than is necessary in most, typical cases. Consequently, the average user experiences significantly lower performance than is actually necessary.

Therefore, there is a need for a faster synchronous system architecture.

US patent application, publication number 2002038418A1 discloses a computer system that can be operated by a clock frequency higher than the clock frequency by which the critical path instruction is executed correctly. The pipeline is driven at a high clock frequency higher than the clock frequency by which critical path instruction can be executed correctly. The computer system includes a high frequency ALU being operated by the pipeline clock frequency, and at least two low frequency ALUs being operated by the low clock frequency by which the critical path instruction is executed correctly. Each instruction of the execution stage is inputted to the low frequency ALUs alternately and each executes the critical path instruction in two machine cycles. If the high frequency ALU can execute an instruction correctly, the output of the high frequency ALU is selected as the execution result of the pipeline execution stage, and if the high frequency ALU cannot execute an instruction correctly, the output of a low frequency ALU which is in charge of the same instruction is replaced as the execution result of the pipeline execution stage. Adjustement of the clock frequency according to critical path incidence is also disclosed.

### SUMMARY OF THE INVENTION

In accordance with the present invention, there is provided a method for operating a synchronous digital system and corresponding system as claimed in any of the accompanying claims.

These and other objects, features and advantages of the present invention will become apparent in light of the following detailed description of preferred embodiments thereof, as illustrated in the accompanying drawings.

### BRIEF DESCRIPTION OF THE DRAWINGS

FIG. 1 illustrates a functional block diagram of a digital synchronous system;
FIG. 2 illustrates a first embodiment of a digital system according to the present invention;
FIG. 3 illustrates a timing diagram for the system illustrated in FIG. 2;
FIG. 4 illustrates a first alternative embodiment of the present invention;
FIG. 5 illustrates a timing diagram for the first alternative embodiment illustrated in FIG. 4;
FIG. 6 illustrates a second alternative embodiment of the invention;
FIG. 7 illustrates a timing diagram for the embodiment illustrated in FIG. 5;
FIG. 8 illustrates a block diagram of a timing error avoidance system;
FIG. 9 is a more detailed block diagram illustration of the timing error avoidance system illustrated in FIG. 8;
FIG. 10 is a block diagram illustration of the timing checker circuit illustrated in FIG. 9; and
FIG. 11 illustrates a timing diagram for the embodiment illustrated in FIG. 10.

### DETAILED DESCRIPTION OF THE INVENTION

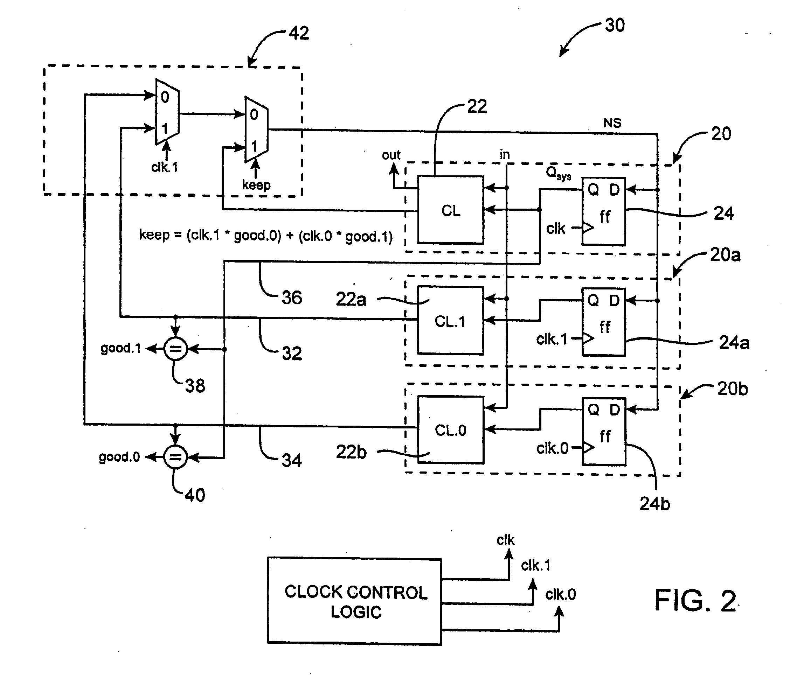

FIG. 2 illustrates a first embodiment of a digital system 30 according to the present invention. The digital system 30 includes two copies 20a, 20b of a main digital synchronous system 20 illustrated in FIG. 1, wherein each of the copies 20a, 20b operates at half the speed of the main digital synchronous system 20. One of the copies replicates the results of the main digital synchronous system 20 in odd cycles, while the other copy replicates the results in even cycles. The two half-speed systems 20a, 20b are operated one main system cycle out-of-sync with each other. Both of the half-speed systems' 20a, 20b outputs on lines 32, 34 respectively are compared with the main system output on the line 36 in alternate cycles using comparators 38, 40. If there is a difference between the two outputs (e.g., between the signals on lines 32 and 36), an error is detected and selection logic 42 selects the output signal from the half-speed system, assuming of course the error was caused by the higher speed system (i.e., system 20). One cycle of operation is lost for every correction necessary; this is referred to as a miscalculation penalty.

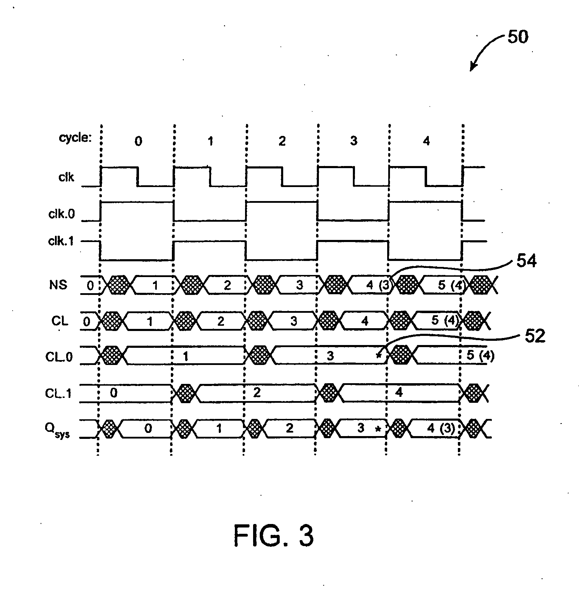

FIG. 3 illustrates a timing diagram for the system 30 illustrated in FIG. 2, the first three cycles of operation (i.e., 0-2) are for the case when no errors occur. The numbers within the individual signal timing charts indicate which computation the signal is working on or holds at that time. At the end of cycle three 52 (at the asterisk), a comparison of the signal CL.0 (half-speed) on the line 34 with the signal Q_sys on the line 36 indicates an error in computation 3. The system 30 then stalls one cycle, with the next state remaining at 3 in cycle 3 (see 54), which it gets from CL.0, having the correct version of computation 3, and the system resumes operation with the correct result. In cycles 3 and later the ideal computation numbers are shown without parentheses, and the actual (with delay) computation numbers are shown with parentheses.

The half-speed systems 20a, 20b must not be operated faster than the original worst-case system speed to help ensure error-free computation to compare the high-speed main computation with. This solution requires approximately three times the hardware of the original system.

It is possible to modify the solution to allow performance increases greater than a factor of two. For each increment of factor increase (e.g., increment of one from 2x to 3x), another copy of the hardware must be used. Further, the slow comparison systems use a clock that is an increment of factor slower, e.g., in the 3x performance increase case, the third-clock system (not shown) operates at a third of the frequency of the main system clock. For each increment of factor increase, the miscalculation penalty increases by a cycle (e.g., for the 3x case the penalty is two cycles). Other cases are handled accordingly. Note that all of the clocks in the overall system are synchronized.

As the frequency increases, the basic performance of the system increases, but at some point the degradation in performance due to the miscalculation penalties from an increasing error rate offsets the basic (clock rate) performance, decreasing the overall performance. Therefore, the system 3 0 determines the maximum performance point, and adapts to changing conditions to determine the best performance given the actual system operating conditions and manufacturing tolerances of the components therein. The system utilizes a control technique to adjust the system clock frequency in real-time. The basic operation of such a system may be biased towards increasing the clock rate, and receive information from the comparators of the timing error detection circuitry. The system clock drives a counter having a clock enable function. The counter is disabled when an error is detected (in the case of our performance doubling example, this is for one cycle per error). Therefore, the overall absolute averaged count rate of the counter is a direct measure of the system's performance; as errors increase, it counts less often, although at a faster rate - the same dynamics as those of the invention's performance.

The smoothed output of the counter is fed back into the system's clock generator, adjusting the frequency of the clock appropriately. If the averaged counter output is low, it increases the clock frequency (and the counter output also increases) until the averaged counter output begins to decrease; the frequency is then incrementally lowered, increasing the counter output, until the output starts to decrease again, at which point the frequency reverses course once again. That is, the frequency of the clock increases while the derivative of the performance (integrated counter output) increases; when the latter decreases, the clock frequency is decreased; when the performance begins to increase again, the clock frequency is once again increased.

The base digital synchronous system 20 (FIG. 2) is duplicated, and the outputs of the two copies 20a, 20b (FIG. 2) are compared every cycle. The clock frequency increases until the copies 20a, 20b (FIG. 2) differ in their results. The system 30 then backtracks to a known good state, and operation resumes.

This technique assumes that given the statistical variations in the manufacture of the two copies 20a, 20b, one copy will fail at a lower frequency than the other. If they both fail at the same time and in the same way, no error will be detected, and the system 30 will malfunction. There are actually cases in which a finite error rate in such a system can be tolerated. For example, if such a DSP device were manipulating an image and failed once during the image, potentially only one pixel of the image out of around a million pixels total would have an incorrect value, and no one would notice.

For mission critical applications this technique would not be suitable. However, the technique may be modified to function with any probability simply by continuing to add copies of the original digital system to the modified system, and comparing all of the outputs. In such a method voting techniques can be used. These systems have been used (e.g., in the Space Shuttle), but to enhance reliability rather than improve performance. Therefore, existing systems may have their performance improved by increasing their clock rate to an acceptable error (tolerated) rate level using the control system technique according to an aspect of the present invention.

This embodiment of the invention was tested using programmable hardware in conjunction with a variable frequency clock generator to provide a piece of combinational logic. Specifically, a 32-bit adder was built using a commercial-off-the-shelf Field Programmable Gate Array (FPGA). The inputs to the 32-bit adder came from registers using the same clock. There were also two registers on the output of the adder. The first was loaded one cycle after the input registers to the adder are loaded with test data. The second was loaded two clock cycles after the inputs were loaded. A comparator compared the outputs of the first and second output registers, hence at times differing by one cycle. Two one-bit registers were on the comparator output, to save (i.e., sample) the comparison output at different times. Therefore, the major basic elements of the invention were modeled. For each event, two random numbers were applied to the inputs of the adder at the same time. The output of the adder was latched both one and two clock cycles later. By adjusting the clock frequency and looking at the output register results, and the comparator results, it was determined when the adder produced correct results, and if correct/incorrect operation was detected by a slower system (i.e., the second register, which gives the adder twice the time to compute its result). The overall system was driven and examined by a host computer, which further verified the additions.

The primary experiment determined the frequency that the system can operate at without error, or rather, with very few (all tolerated) errors. As a base frequency, we used the results of the design tools that indicate the adder (in the system, that is, including register delays) can operate at about 33 MHz (33 million adds per second) assuming worst case conditions. That corresponds to a clock period of about 30 nanoseconds.

The experiment was performed a number of times. Each pass included performing twenty different additions on random numbers at one operating frequency. The system was initialized to a low frequency. The clock oscillator was variable from about 360 KHz to 120 MHz. A host computer sets the frequency, and used a bisection algorithm to quickly find the highest operating frequency with no errors among the twenty additions.

After the first run, the operating frequency was determined to be about 60+ MHz. However, certain aspects of the data indicated that the system may actually be operated faster; the comparator was actually too slow. The experiment was run again allowing the comparator more time to operate (but still looking at the two output registers clocked at the original times). The operating frequency increased to about 95 MHz. Therefore, a factor of approximately three improvement in adder performance was realized.

A problem performing quick additions is the necessity to allow for the carry to propagate from the least significant bit (LSB) to the most significant bit (MSB), in the worst case. However, the worst case rarely happens with random data. Further, although the probability of a carry out of any particular bit is about 1/2, the probability of having carries propagate over multiple bits decreases exponentially with the number of bits. A typical "maximum" propagation length of 8-9 bits was estimated, and that is almost exactly what we found in the twenty (20) random pairs of addends and augends (adder inputs) of the experiment. Hence, the worst case propagation length of 32-bits (in this case) is no where near seen in typical data, and the output of the adder actually settles in much less time than one might think.

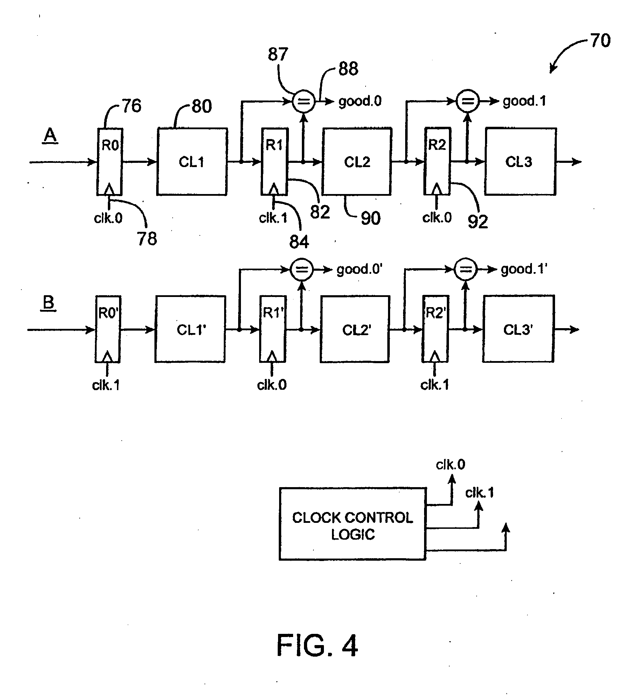

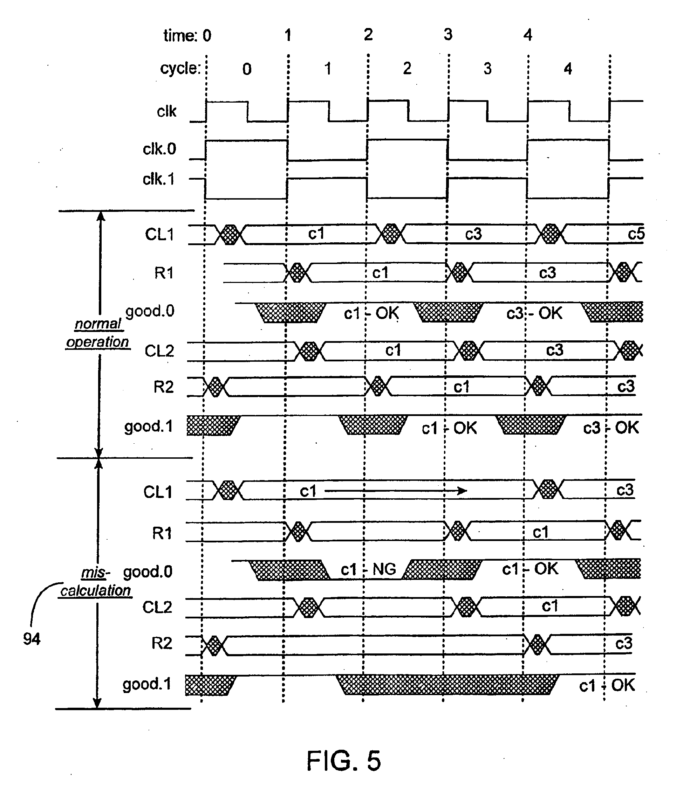

FIG. 4 illustrates a first alternative embodiment 70 of the present invention. This embodiment may be realized at the gate and latch level or at the register level. The system illustrated in FIG. 4 has a hardware cost that increases at the same rate as the performance (e.g., about 2x hardware cost for 2x performance increase, while the power also increases by a factor of about two). This solution is also easier to build and does not increase the amount of logic (gate delay) in the critical path. This solution is applied at the functional level in a pipelined system. FIG. 5 illustrates a timing diagram for the first alternative embodiment system 70 illustrated in FIG. 4.

For the purposes of describing this embodiment, and certainly not by limitation, it is assumed that the system is pipelined. In a pipelined system (common in today's processors), the work of the original combinational logic is divided up into several sections/stages. Each stage does part of the work of the computation, but at different times. As known, a classic pipelined system operates in the same fashion as an assembly line, i.e., many products are being constructed in the line at any given time, but each is at a different point in the construction process. Although it takes about the same time to perform a single computation, many computations can be in process at the same time, realizing a type of parallelism and thus improving performance.

Referring to FIG. 4, the system 70 includes two identical copies of the original system, adding comparators, and clocking adjacent stages on alternate system clock cycles. The two copies use complementary clocks at corresponding stages. The two half-speed clocks are skewed by one system clock cycle, as shown in FIG. 5. Referring to FIG. 5, the timing diagram illustrates the timing when no errors occur, and also the system timing when an error has been detected at the output of R1, in section A. (FIG. 4).

Referring again to FIG. 4, assume that the hardware illustrated in the diagram is part of the system's overall pipeline (e.g., an Intel Pentium II microprocessor has about twelve stages in its pipeline). Pipelining allows a higher speed clock to be used than otherwise. The primed (') hardware is a copy of the unprimed (top) hardware.

The operation of the system 70 is as follows. Inputs to the overall system come in at the system clock rate. Note that at least as far as this hardware is concerned, there is no actual clock operating at the full rate. The inputs go to each pipeline 72, 74 in alternate cycles. At time 0, an input is latched into latch R0 76 by the signal clk.0 on line 78. The first computation occurs in combinational logic block CL1 80, and is latched one system cycle later at time 1 into latch R1 82 by the signal clk.1 on line 84. The signals clk.0 and clk.1 run at half the rate of the overall system clock.

Therefore, the computation in the combinational logic block CL1 80 as latched in latch R1 82 takes one system cycle. However, block CL1 80 does not have its inputs changed until time 2 (see FIG. 5). At end of the second cycle, the output of latch R1 (one cycle computation time) is compared with the current output of the combinational logic block CL1 (two cycles of computation time, hence the guaranteed correct answer). If the two results, slow one and fast one, are equal the signal good. 1 on line 88 is true indicating that the fast computation is correct and no corrective action needs be taken. At time 2 (see FIG. 5) the output of the second computation, from combinational logic block CL2 90, is latched into latch R2 92. Similar operations happen in the rest of the pipeline A stages, as well as in pipeline B. Results leave pipeline A (and B) at a rate one-half of the overall system clock rate, where the system clock rate is twice as fast as the system clock rate without the invention.

However, there are two pipelines, so results are produced at 0.5*2*2 = 2 times the rate of the original system.

If a miscalculation occurs, we then have the timing of the lower diagram 94 illustrated in FIG. 5. In this case, the latch R1 82 has latched incorrect results from the combinational logic block CL1 80. This is detected at the end of time 2 by comparator 87, which provides a signal value on the line 88 indicating that the signal good.1 is false. Therefore, the combinational logic block CL2 90 also has an incorrect answer, so the signal clk.0 on the line 78 is disabled for all of pipeline A at time 2 (see FIG. 5). The combinational logic block CL1 80 is still computing the same result for inputs IA1, and therefore at time 3 (see FIG. 5) the latch R1 82 latches in the correct result from the combinational logic block CL1 80. The combinational logic block CL1 80 has had more than two cycles to compute its result, which is thus correct. This correct result is now in the pipeline, and normal high-throughput operation resumes. Therefore, pipeline A has suffered a miscalculation penalty of two system clock cycles. Overall, this may lead to a system miscalculation penalty of one cycle, but if we require that the outputs from the two pipelines be in order, pipeline B must also be stalled by two system cycles, and hence we assume the penalty is two cycles for a miscalculation in this embodiment.

If typical delays are one-third the original system's worst-case delays, and we thus would like to improve performance by a factor of three, a third copy of the system would be needed, with three clocks running at a third of the system clock rate, which is itself running three times faster that the original system clock. Note that the power required to operate the new system also increases proportionally to the performance increase. The miscalculation penalty also increases proportionally to three cycles.

An advantage of the system illustrated in FIG. 4 versus the system illustrated in FIG. 2 is that the embodiment in FIG. 4 does not require selection logic (see 42 in FIG. 2), which allows a faster clock, or rather, does not increase the delay through a stage.

Referring still to FIG. 4, inputs to new computations alternate entering pipeline A and pipeline B every cycle. Similarly, the output from the overall system alternates coming from pipeline A and pipeline B every cycle. Also note that as described above, the two pipelines are independent (i.e., a computation in one pipe does not depend on a computation in the other pipe).

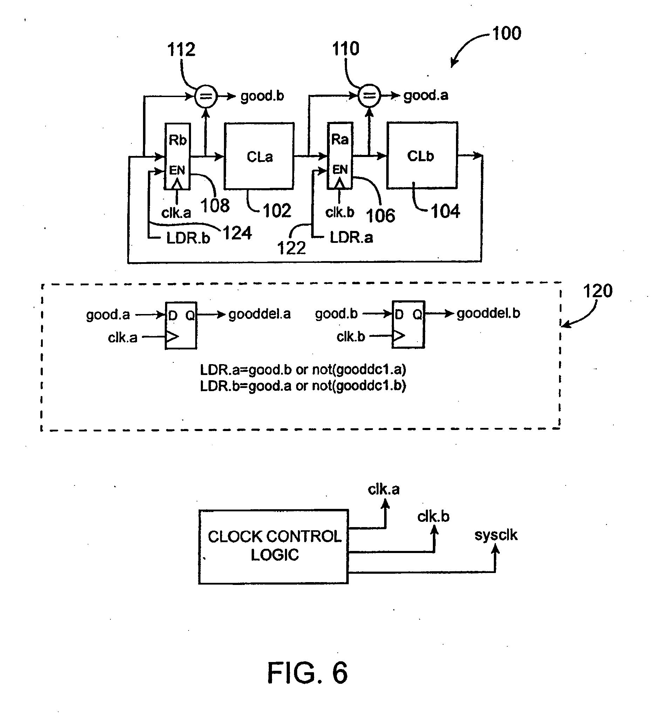

FIG. 6 illustrates yet another embodiment 100 of the invention. Notably, the embodiment 100 illustrated in FIG. 6 realizes a 2x performance for less than a 2x increase in hardware cost, while power increases by a factor of four. A major feature of this embodiment is its applicability to all digital systems, via the general digital system model illustrated in FIG. 1.

Referring to FIG. 6, this embodiment is premised on creating a mini-version of a proportional pipe, but constructing the stages' combinational logic in a different manner. Assuming the original combinational logic block CL illustrated in FIG. 2 is split it into two equal-delay combinational logic sections CLa 102 and CLb 104 (i.e., we increase the pipelining by a factor of two). This allows the clock frequency to be doubled, and using a two-phase clocking system the implicit system frequency can be increased by another factor of two. However, since we only get a result every complete pass through the pipeline (i.e., every two implicit system clock cycles), the overall performance increases by a factor of two.

This embodiment splits the combinational logic block 22 illustrated in FIG. 2 into two blocks 102,104, wherein each block includes its own staging register 106,108 respectively, as in a pipeline, except the stages are clocked on alternate system cycles. The system 100 also includes comparators 110,112. The implicit system clock frequency is 4x the original. The explicit (physically existing) stage clock frequencies of the solution are 2x the original system clock frequency, and the same as the new explicit system clock frequency.

The system 100 also includes error handling logic 120 to control the unit and handle errors. The error handling logic generates a signal LDR.a on line 122, which is the synchronous load enable line for the register Ra 106. The register Ra 106 is loaded when the signal LDR.a on the line 122 is true and the register Ra's clock goes from 0 to 1. Therefore, the register is loaded when either there was an error out of the combinational logic block CLa 102, and the logic block CLa needs more time to compute its result, or when the prior stage produced a valid result without extra delay. The technique for generating the signal LDRb on line 124 within the error handling logic is similar.

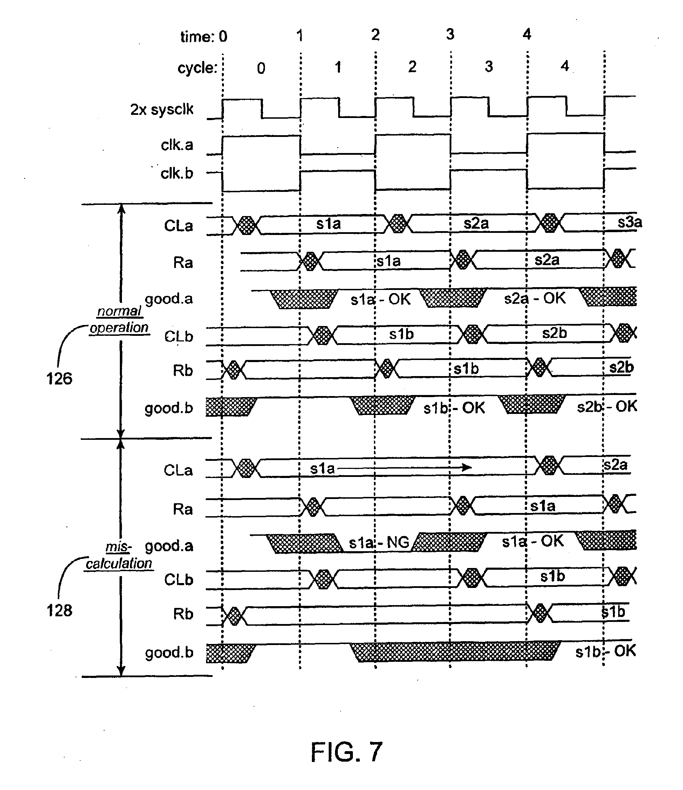

FIG. 7 illustrates a timing diagram for the embodiment illustrated in FIG. 5. Notably, the two half-speed clocks clk.a and clk.b are skewed by one implicit system clock cycle. The explicit system clock is the same as the signal clk.a. The top diagram 126 (FIG. 7) illustrates the timing when no errors occur, while bottom diagram 128 illustrates the timing when an error has been detected at the output of the latch Ra 106 (FIG. 5). The nomenclature: "s1a" indicates that state 1, part a (the first half of the original state) is being computed.

As with the embodiment illustrated in FIG. 4, the performance of the system illustrated in FIG. 6 can be increased by increasing the number of sections of the system. For example, to increase the performance by a factor of three, the combinational logic would be split into three sections, each ending in a register clocked by one distinct phase of a three-phase clock.

A base 32-bit adder would require the same overall combinational logic (combinational adder itself) and at least two 32-bit registers for the inputs (64-bits of registers total), and in some cases an additional 32-bit register for the output, although in a pipelined system the output register would be counted as part of the next stage. An adder based upon the embodiment in FIG. 6 would use 92-bits of registers and three ten- or eleven-bit comparators. Making a rough assumption that one-bit of comparator costs the same as a one-bit register, the total hardware cost for the embodiment illustrated in FIG. 6 125-register-bit equivalents.

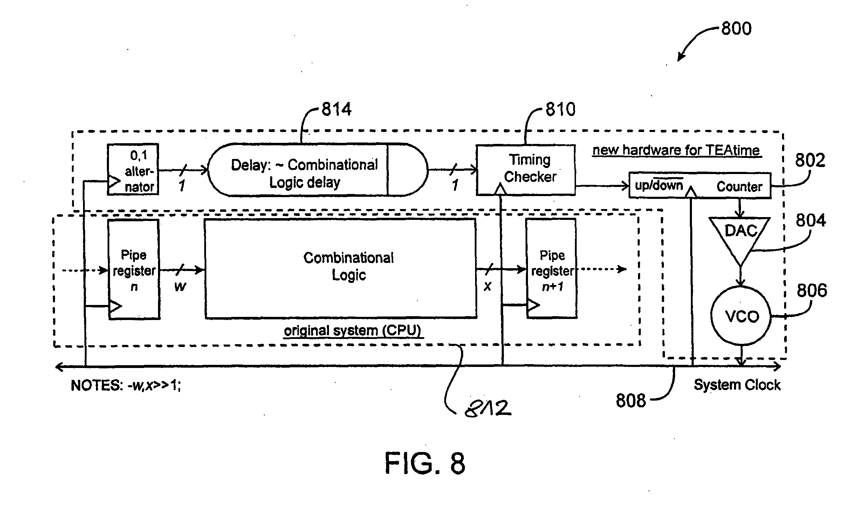

A timing error avoidance system 800 is shown in FIG. 8 and comprises standard logic and analog element, an up/down counter 802 to drive a digital-to-analog converter (DAC) 804, which in turn generates an analog voltage to drive a VCO 806 that sets the frequency of the system clock on a line 808. In the example system, the counter 802 is always changing, and by at most one, up or down. With advances in VLSI technology, all of these elements should be realizable on the same chip as the system. Note that since there is an explicit feedback loop from the system clock to the counter's setting, the absolute value of the counter 802 is not important, only that it be able to go up and down in response to commands from the timing checker 810.

The timing error avoidance system 800 is constructed by determining the critical path between register elements within a digital machine 812. For example in a pipelined CPU, this includes determining the slowest (clock-period determining) stage, and the critical (longest, time-wise) path through that logic and constructing a one-bit wide version of that logic in which a change at the one-bit version's input from a logic 0-to-1 or a 1-to-0 propagates all the way through to the end of the logic. This delay test logic is not connected to any of the regular logic of the machine. However, the delay test logic nominally has the same delay as the worst case path through the machine. Drive the delay test logic 814 with alternating 1's and 0's, the latter synchronized with the system clock on the line 808. The location of this test input corresponds to the output of the beginning pipeline register of the slowest pipeline stage in a CPU. At the end of every cycle, if the test data has not reached the output register of the pipeline stage before the system Clock edge, then the system is operating slower than it might, and the system Clock frequency is increased. If, however, the test data has reached the output register, then the system Clock frequency is getting close to the system's limit, and thus the system Clock frequency is reduced.

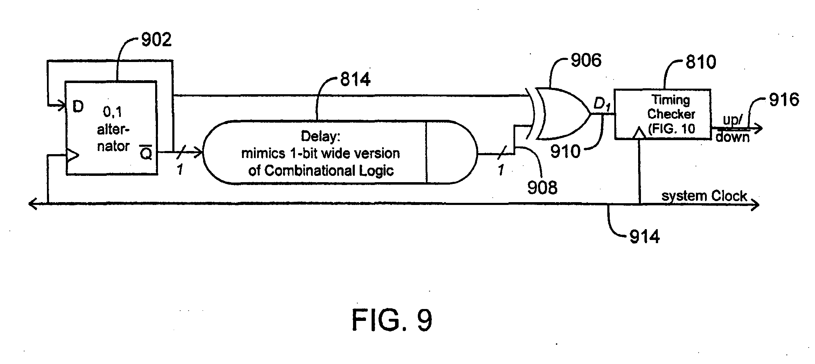

In order to show the simplicity of the main timing error avoidance circuitry, we provide low-level details of its realization in FIG. 9. The alternating 1's and 0's are created by a flip-flop 902 wired for toggle operation. The delay test logic 814 includes a one-bit slice through an address multiplexor, the CPU's register file, the bypass multiplexor used for operand forwarding in the CPU to reduce data dependencies, and a zero-detecting comparator across the data path width.

An exclusive-OR gate 906 normalizes delayed signal on line 908 to present a signal on line 910 to timing checker 810 with the same polarity regardless of the output of the toggle flip-flop 902. The delay of the delay test logic 814 is adjusted at system design time to be slightly greater than that of the aforementioned critical path to give a suitable safety margin. This is a relatively simple procedure when a high-quality logic simulator is used in the design process. In the case of our example CPU system a structural simulation was performed on the CPU running the test program. From this simulation, we obtained both the worst-case operating frequency for a non-timing error avoidance (baseline) CPU, and checked the performance of the timing error avoidance logic to ensure that the system clock frequency was reduced before the timing constraints of the regular CPU logic were violated. This ensured timing error avoidance.

There is one place in the timing error avoidance system illustrated in FIG. 9 where system failure can occur - this is at the start of the timing checker 810, where the delayed signal is latched into a flip-flop. Since the delayed signal can be positioned anywhere in time, and is not synchronized with the system clock on line 914, there is the possibility that the delayed test signal could change value at the same time as the signal is being latched in the timing checker 810. This may result in metastability at the output of the timing checker 810, in which the physical value of the logic output signal on line 916 of the timing checker flip-flop is neither 0 or 1. It is well known that metastable signals can stay in this state indefinitely, leading of the value by the rest of the system logic.

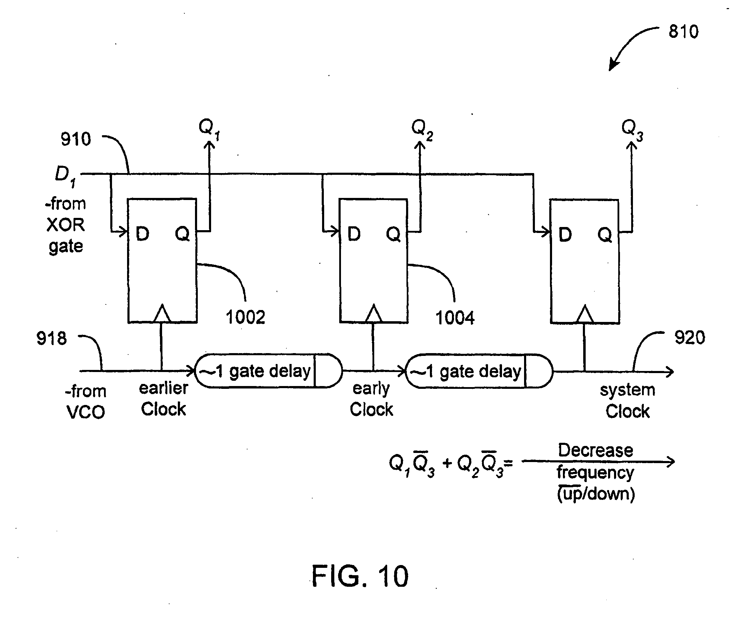

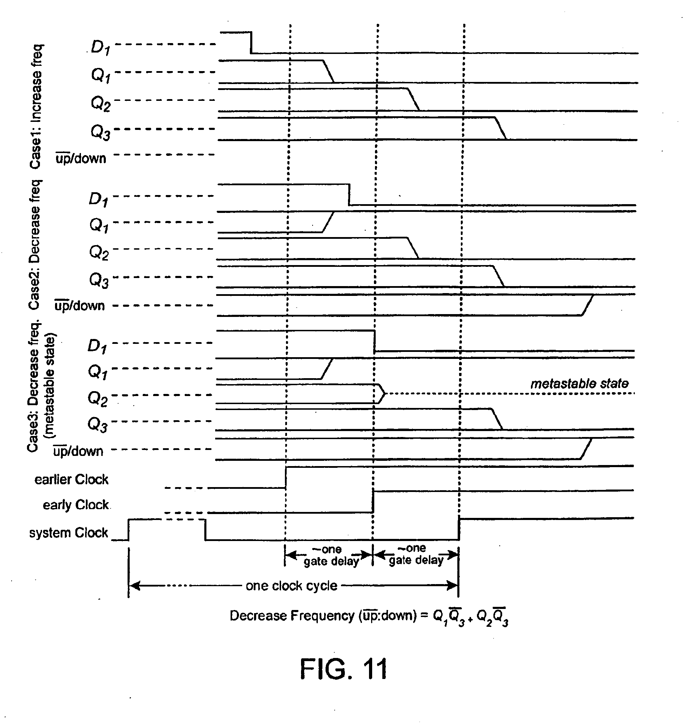

FIG. 10 illustrates an embodiment of the timing checker circuit 810 that addresses raised in the preceding paragraph. The timing check circuit 810 samples the delay test signal D 1 on line 910, at two different times. Then, for a single cycle, only one of flip-flops Q1 1002 or Q2 1004 can possibly be in a metastable state. That is, flip-flops 1002, 1004 cannot both be metastable in the same cycle, since the delay test signal on the line 910 only changes value at most once in a cycle. The output of the logic looking at flip-flip Q1 1002 and flip-flop Q2 1004 to determine up or down clock frequency changing is only sampled long after a metastable condition can begin, as long as the frequency change increment is kept suitably small. The timing checker logic ensures that no metastable condition propagates past the sample point. For example, see FIG. 11 case 3, for an example of the handling of a metastable condition. Cases 1 and 2 show more typical frequency increasing and decreasing, respectively.

As shown in FIG. 10, a signal from the VCO is input on line 918. This signal is input to two serial gate delays to generate the system clock on line 920.

The timing error avoidance logic is relatively inexpensive. For example, for a 32-bit CPU the hardware cost of the delay test logic is less than 1/32 of the cost of the slowest pipeline stage. The variable frequency oscillator adds only a small cost.

If a CPU or other digital system has two or more pipeline stages of similar delay, they can all be treated as described herein for the single stage case, with a "decrease Clock frequency" signal from any of them having priority for the setting of the Clock frequency.

Although the present invention has been shown and described with respect to several preferred embodiments thereof, various changes, omissions and additions to the form and detail thereof, may be made therein, without departing from the scope of the invention.

## Claims

1. A method for operating a synchronous digital system having clock means for synchronously controlling operating of system logic (812) with avoidance of timing error, the method including the steps of:
providing a logic operation input to delay test logic (814), wherein said delay test logic is separate from the system logic (812) in that it is not connected to any of the regular logic of the system logic (812) and wherein said delay test logic has a delay representing a delay of a worst case delay path for said system logic (812);
increasing clock frequency of the digital system while monitoring (810) the delay test logic for errors in logic operation output to report a fault using a frequency controllable clock in a VCO feedback loop (806);
upon detecting said delay test logic operation fault, said VCO feedback loop (806) slowing the clock frequency associated with the fault to a clock frequency at which no fault is detected.

2. The method according to claim 1, further including the step of thereafter increasing said clock frequency until a fault reoccurs.

3. The method according to claim 2, wherein the delay test logic includes an operational safety margin to guarantee that a fault occurs in the delay test logic before a fault can occur in the system logic.

4. The method according to claim 1, wherein input for said delay test logic is a sequence of digital values including alternating logic one and logic zero.

5. The method according to claim 4, wherein input for said delay test logic is a digital bit stream of alternating logic ones and logic zeros.

6. The method according to claim 1, wherein logic transition timing alone determines transition to a too fast state and transition to a too slow state.

7. A synchronous digital system having clock means for synchronously controlling operating of system logic (812) with avoidance of timing error, comprising:
delay test logic (814) separate from the system logic in that it is not connected to any of the regular logic of the system logic (812) and having a delay representing a delay of a worst case delay path for said system logic;
signal input means providing logic operation input to said delay test logic;
delay test logic monitor (810) for errors in logic operation output of said delay test logic to report faults;
a frequency controllable clock in a VCO feedback loop (806) with said delay test logic monitor;
said VCO feedback loop (806) slowing the frequency of said clock upon delay test logic monitor detecting an operation fault in said delay test logic to a clock frequency at which no fault is detected.

8. The system according to claim 7, said VCO feedback loop (806) being operative to increase frequency of said clock after no fault is detected.

9. The system according to claim 8, wherein said delay test logic includes a time delay for producing an operational safety margin to guarantee that a fault occurs in the delay test logic before a fault can occur in the system logic.

10. The system according to claim 8, wherein said signal input means is operative to produce a sequence of digital values including alternating logic one and logic zero.

11. The system according to claim 10, wherein said signal input means is operative to produce a digital bit stream of alternating logic ones and logic zeros.

12. The system according to claim 7, wherein said delay test logic monitor comprises an exclusive OR logic gate for yielding a logic transition such that timing alone determines transition to a too fast state and transition to a too slow state.

13. The system according to claim 12, wherein the delay test logic monitor further includes a flip flop for controlling the frequency of the frequency controllable clock in response to output of said exclusive OR logic gate.

## Patentansprüche

1. Verfahren zum Betreiben eines synchronen Digital-Systems mit einem Takt-Mittel zum synchronen Steuern der Funktion einer System-Logik (812) unter Vermeidung von Zeit-Fehler, wobei das Verfahren die Schritte einschließt von:
Bereitstellen eines Logik-Funktions-Inputs bzw. einer Eingabe logischer Verknüpfungen für eine Laufzeit- bzw. Delay-Test-Logik (814), wobei die Laufzeit-Test-Logik von der System-Logik (812) gesondert ist, indem sie nicht an irgendeine der regulären Logik von der System-Logik (812) angeschlossen ist und wobei die Laufzeit-Test-Logik eine Laufzeit aufweist, die eine Laufzeit von einem Worst-Case-Laufzeit-Path für die System-Logik (812) darstellt, Erhöhen der Takt-Frequenz des Digital-Systems während die Laufzeit-Test-Logik hinsichtlich des Logik-Funktions-Outputs abgefragt wird (810), zum Melden eines Fehlers unter Verwendung eines Frequenz steuerbaren Takts in einer VCO-Rück-Kopplungs-Schleife (806);
wobei nach Detektieren des Laufzeit-Test-Logik-Funktions-Fehlers die VCO-Rück-Kopplungs-Schleife (806) die mit dem Fehler in Verbindung stehende Takt-Frequenz auf eine Takt-Frequenz herabsetzt, bei der kein Fehler nachgewiesen wird.

2. Verfahren nach Anspruch 1, außerdem den Schritt einer anschließenden Erhöhung der Takt-Frequenz einschließend, bis wieder ein Fehler auftritt.

3. Verfahren nach Anspruch 2, wobei die Laufzeit-Test-Logik eine Funktions-Sicherheits-Spanne einschließt, zur Sicherstellung, dass ein Fehler in der Laufzeit-Test-Logik auftritt, bevor ein Fehler in der System-Logik auftreten kann.

4. Verfahren nach Anspruch 1, wobei der Input für die Laufzeit-Test-Logik eine Sequenz von digitalen Werten darstellt, einschließlich Abwechseln von logischer Eins und logischer Null.

5. Verfahren nach Anspruch 4, wobei der Input für die Laufzeit-Test-Logik eine digitale Bit-Reihe von sich abwechselnden logischen Einsen und logischen Nullen ist.

6. Verfahren nach Anspruch 1, wobei ein Logik-Transition-Timing allein Transition für einen zu schnellen Zustand und Transition für einen zu langsamen Zustand bestimmt.

7. Synchrones digitales System mit einem Takt-Mittel zum synchronen Steuern der Funktion einer System-Logik (812) unter Vermeidung von Zeit-Fehler, umfassend:
Laufzeit-Test-Logik (814), gesondert von der System-Logik, indem sie nicht an irgendeine der regulären Logik von der System-Logik (812) angeschlossen ist und mit einer Laufzeit, die eine Laufzeit von einem Worst-Case-Laufzeit-Path für die System-Logik darstellt;
ein Signal-Input-Mittel, das einen Logik-Funktions-Input für die Laufzeit-Test-Logik bereitstellt;
einen Laufzeit-Test-Logik-Monitor bzw. ein Laufzeit-Test-Logik-Prüfmittel (810) für Fehler beim Logik-Funktions-Output von der Laufzeit-Test-Logik zum Melden von Fehlern;
einen Frequenz steuerbaren Takt in einer VCO-Rück-Kopplungs-Schleife (806) mit dem Laufzeit-Test-Logik-Monitor, wobei die VCO-Rück-Kopplungs-Schleife (806) die Frequenz von dem Takt, nachdem der Laufzeit-Test-Logik-Monitor einen Funktions-Fehler in der Laufzeit-Test-Logik nachgewiesen hat, auf eine Takt-Frequenz herabsetzt, bei der kein Fehler nachgewiesen wird.

8. System nach Anspruch 7, wobei die VCO-Rück-Kopplungs-Schleife (806) zur Erhöhung der Frequenz von dem Takt wirksam wird, nachdem kein Fehler nachgewiesen worden ist.

9. System nach Anspruch 8, wobei die Laufzeit-Test-Logik eine Laufzeit zur Erzeugung einer Funktions-Sicherheits-Spanne einschließt, zur Sicherstellung, dass ein Fehler in der Laufzeit-Test-Logik auftritt, bevor ein Fehler in der System-Logik auftreten kann.

10. System nach Anspruch 8, wobei das Signal-Input-Mittel zur Erzeugung einer Folge von digitalen Werten, die abwechselnd logische Eins und logische Null einschließen, wirksam ist.

11. System nach Anspruch 10, wobei das Signal-Input-Mittel zur Erzeugung einer digitalen Bit-Reihe von sich abwechselnden logischen Einsen und logischen Nullen wirksam ist.

12. System nach Anspruch 7, wobei der Laufzeit-Logik-Test-Monitor ein exklusives OR-Logik-Gatter zum Abgeben einer logischen Transition umfasst, so dass die Taktung bzw. Zeitgebung allein Transition zu einem zu schnellen Zustand und Transition zu einem zu langsamen Zustand bestimmt.

13. System nach Anspruch 12, wobei der Laufzeit-Logik-Test-Monitor außerdem einen Flip-Flop zur Steuerung der Frequenz von dem Frequenz steuerbaren Takt in Antwort auf ein Output von dem exklusiven OR-Logik-Gatter einschließt.

## Revendications

1. Procédé d'exploitation d'un système numérique synchrone doté de moyens d'horloge pour commander de manière synchrone l'exploitation de la logique système (812) en évitant les erreurs de synchronisation, le procédé comprenant les étapes consistant à :
transmettre une entrée d'opération logique à une logique d'essai de retard (814), dans lequel ladite logique d'essai de retard est distincte de la logique système (812) en ce qu'elle n'est pas connectée à une quelconque logique régulière de la logique système (812), et dans lequel ladite logique d'essai de retard présente un retard représentant un retard d'un chemin de retard du pire cas pour ladite logique système (812) ;
accroître la fréquence d'horloge du système numérique tout en surveillant (810) la logique d'essai de retard en vue d'erreurs de sortie d'opération logique afin de notifier une erreur en utilisant une horloge réglable par la fréquence dans une boucle de rétroaction à oscillateur VCO (806) ;
et, suite à la détection de ladite erreur d'opération logique d'essai de retard, réduire, au moyen de ladite boucle de rétroaction à oscillateur VCO (806), la fréquence d'horloge associée à l'erreur pour la porter à une fréquence d'horloge à laquelle aucune erreur n'est détectée.

2. Procédé selon la revendication 1, comprenant en outre l'étape consistant à accroître suite à cela ladite fréquence d'horloge jusqu'à la nouvelle occurrence d'une erreur.

3. Procédé selon la revendication 2, dans lequel la logique d'essai de retard comprend une marge de sécurité de fonctionnement afin de garantir que l'occurrence d'une erreur dans la logique d'essai de retard précède l'occurrence d'une erreur dans la logique système.

4. Procédé selon la revendication 1, dans lequel une entrée pour ladite logique d'essai de retard est une séquence de valeurs numériques comprenant des uns logiques et des zéros logiques alternés.

5. Procédé selon la revendication 4, dans lequel une entrée pour ladite logique d'essai de retard est un train de bits numériques de uns logiques et de zéros logiques alternés.

6. Procédé selon la revendication 1, dans lequel seul le signal d'horloge de transition logique détermine la transition vers un mode trop rapide et la transition vers un mode trop lent.

7. Système numérique synchrone doté de moyens d'horloge pour commander de manière synchrone l'exploitation d'une logique système (812) en évitant les erreurs de synchronisation, comprenant :
une logique d'essai de retard (814) distincte de la logique système en ce qu'elle n'est pas connectée à une quelconque logique régulière de la logique système (812) et
présentant un retard représentant un retard d'un chemin de retard du pire cas pour ladite logique système ;
des moyens d'entrée de signal transmettant une entrée d'opération logique à ladite logique d'essai de retard ;
un moniteur de logique d'essai de retard (810) pour surveiller les erreurs de sortie d'opération logique de ladite logique d'essai de retard afin de notifier les erreurs ;
une horloge réglable par la fréquence dans une boucle de rétroaction à oscillateur VCO (806) avec ledit moniteur de logique d'essai de retard ;
ladite boucle de rétroaction à oscillateur VCO (806) réduisant la fréquence de ladite horloge lorsque le moniteur de logique d'essai de retard détecte une erreur de fonctionnement dans ladite logique d'essai de retard, afin de l'amener à une fréquence d'horloge à laquelle aucune erreur n'est détectée.

8. Système selon la revendication 7, ladite boucle de rétroaction à oscillateur VCO (806) fonctionnant de sorte à accroître la fréquence de ladite horloge lorsqu'aucune erreur n'est détectée.

9. Système selon la revendication 8, dans lequel ladite logique d'essai de retard comprend un réglage de temporisation pour produire une marge de sécurité de fonctionnement afin de garantir que l'occurrence d'une erreur dans la logique d'essai de retard précède l'occurrence d'une erreur dans la logique système.

10. Système selon la revendication 8, dans lequel lesdits moyens d'entrée de signal fonctionnent de manière à produire une séquence de valeurs numériques comprenant des uns logiques et des zéros logiques alternés.

11. Système selon la revendication 10, dans lequel lesdits moyens d'entrée de signal fonctionnement de manière à produire un train de bits numériques de uns logiques et de zéros logiques alternés.

12. Système selon la revendication 7, dans lequel ledit moniteur de logique d'essai de retard comprend une porte logique OU exclusif pour fournir une transition logique telle que seul le signal d'horloge détermine la transition vers un mode trop rapide et la transition vers un mode trop lent.

13. Système selon la revendication 12, dans lequel le moniteur de logique d'essai de retard comprend en outre une bascule bistable pour commander la fréquence de l'horloge réglable par la fréquence en réaction à la sortie de ladite porte logique OU exclusif.
